Europäisches Patentamt

European Patent Office

Office européen des brevets

(19)

(11) Veröffentlichungsnummer: **0 165 387**

**A1**

(12) # EUROPÄISCHE PATENTANMELDUNG

(21) Anmeldenummer: 85103795.2

(22) Anmeldetag: 29.03.85

(51) Int. Cl.⁴: **F 16 L 9/14**
F 16 L 59/14, F 24 D 3/10
E 03 B 7/00

(30) Priorität: 16.06.84 DE 3422479

(43) Veröffentlichungstag der Anmeldung:
27.12.85 Patentblatt 85/52

(84) Benannte Vertragsstaaten:
AT BE CH FR GB IT LI LU NL SE

(71) Anmelder: Rehau Plastiks AG + Co
Rheniumhaus Postfach 1460
D-8673 Rehau(DE)

(72) Erfinder:
Der Erfinder hat auf seine Nennung verzichtet

(54) Kombinierte Leitung aus Kunststoffrohren.

(57) Die Erfindung betrifft eine kombinierte Leitung aus Kunststoff-Rohren für die Trink- und Brauchwasserversorgung sowie für die Heizungsinstallation. Die kombinierte Leitung kann im freien Raum, in Schächten, unter Putz, im Estrich oder in Beton verlegt werden. Sie besteht aus einem mediumführenden Innenrohr (1) und einem dieses mit Isolierwirkung umgebenden Schutzrohr (2), wobei das Schutzrohr (2) als Mantelrohr aus einem geschlossen zelligen Schaumstoff gebildet ist. Die Erfindung wird darin gesehen, daß das Schutzrohr (2) wenigstens am inneren Umfang durchgehend mit einer Strukur (21) versehen ist. Die Tiefe der Struktur (21) soll maximal die Hälfte der Dicke des Schutzrohres (2) ausmachen. Das mediumführende Innenrohr (1) liegt im unbelasteten Zustand wenigstens teilweise am strukturierten Innenumfang des Schutzrohres (2) an.

.../...

Fig. 2

## Kombinierte Leitung aus Kunststoffrohren

Die Erfindung betrifft eine kombinierte Leitung aus Kunststoffrohren für die Trink- und Brauchwasserversorgung und die Heizungsinstallation zur Verlegung im freien Raum, in Schächten, unter Putz, in Estrich oder im Beton, bestehend aus einem mediumführenden Innenrohr und einem dieses mit Isolierwirkung umgebenden Schutzrohr, wobei das Schutzrohr als Mantelrohr aus einem geschlossenzelligen Schaumstoff gebildet ist.

Aus dem DE-PS 2038991 ist eine Rohrleitungsanordnung für eine Warmwasserzentralheizungsanlage bekannt, bei der die mediumführenden Rohre mit radialem Spiel beweglich in flexiblen Schutzrohren verlegt sind. Das radiale Spiel des mediumführenden Rohres in dem Schutzrohr bewirkt, daß das mediumführende Rohr im wesentlichen von Luft umgeben ist, welche zusammen mit dem medienführenden Rohr und dem Schutzrohr eine entsprechende Wärmeisolierung erbringt. Diese Wärmeisolierung reicht von ihrem Wert jedoch unter Berücksichtigung der neuesten Isolationsvorschriften für solche Anwendungen nicht aus, sodaß die beschriebene Rohrleitungsanordnung nicht einsetzbar ist.

Aus dem DE-GM 83 18 005 ergibt sich ein Rohrstrang für die Wasser- und Heizungsinstallation, welcher einerseits aus einem mediumführenden Innenrohr und einem dieses umgebenden Mantelrohr besteht, wobei das Mantelrohr im Inneren ein flexibles Kunststoff-Wellrohr ist, welches an seinem äußeren Umfang von einem Tubus aus Schaumkunststoff-Material umgeben ist. Der äußere Tubus aus Schaumkunststoff-Material ist dabei als geschlossener Mantel geformt und an seinem inneren Umfang mit dem Außenumfang des Wellrohres durch Verschweißen oder Verkleben verbunden. Die Herstellung des Schutzrohres in dieser Ausführung ist aufwendig und damit kostenträchtig, da das innere Wellrohr und der Schaummantel des Schutzrohres nacheinander gefertigt und dann durch Verkleben bzw. Verschweißen am Umfang aufeinander festgelegt werden müssen.

Hier setzt die Erfindung ein, die es sich zur Aufgabe gestellt hat, die Nachteile des Standes der Technik zu vermeiden und eine kombinierte Leitung aus Kunststoffrohren für die Trink- und Brauchwasserversorgung und die Heizungsinstallation anzugeben, welche eine hervorragende Isolierwirkung aufweist und auf einfache Weise hergestellt werden kann. Erfindungsgemäß wird dazu vorgeschlagen, daß das Schutzrohr wenigstens am inneren Umfang durchgehend mit einer Struktur versehen ist, daß die Tiefe der Struktur maximal die Hälfte der Dicke des Schutzrohres ausmacht und daß das mediumführende Innenrohr im unbelasteten Zustand der kombinierten Leitung wenigstens teilweise am strukturierten Innenumfang des Schutzrohres anliegt.

Der Vorteil dieser Anordnung wird darin gesehen, daß zunächst eine den unterschiedlichen Isolationserfordernissen entsprechende Schaumstoffbahn mit den Erfordernissen entsprechender Dicke erzeugt werden kann. Gleichzeitig mit der Erzeugung der Schaumstoffbahn kann die Struktur geschaffen werden, deren Tiefe auf maximal die Hälfte der Dicke der Schaumstoffbahn einstellbar ist. Die Struktur ist vorteilhaft eine Pyramidenstruktur mit einer äußeren Basisfläche und einer nach innen weisenden Spitze. Ebenfalls gleichzeitig mit der Herstellung der Struktur kann im Bedarfsfall die dünne Kunststoff-Folie aufgebracht werden. Die Herstellung der entsprechenden Kunststoffbahn kann auch so erfolgen, daß auf die später die innere Oberfläche des Schutzrohres bildende Seite dieser Kunststoffbahn die dünne Folie aufgelegt und danach unter Verbindung der Folie mit der Oberfläche der Schaumstoffbahn die Struktur eingebracht wird.

Danach wird die Schaumstoffbahn auf eine Breite gebracht, die wenigstens dem Umfang des späteren Schutzrohres entspricht. Zur Bildung dieses Schutzrohres wird die Schaumstoffbahn an ihren Längsseiten zusammengebracht und verschweißt. Damit ist das Schutzrohr mit der fortlaufenden Struktur am inneren Umfang fertiggestellt. In das Schutzrohr wird nunmehr das mediumführende Innenrohr eingezogen, wobei dieses Innenrohr beim Einziehen und danach wenigstens teilweise an den Spitzen der Strukturierung anliegt. Wie bereits erwähnt, kann das Schutzrohr vorteilhaft über den gesamten inneren Umfang durchgehend mit einer die Struktur erhaltenden dünnen Kunststoff-Folie abgedeckt sein.

Die erfindungsgemäß kombinierte Leitung aus Kunststoffrohren hat den Vorteil der einfachen Herstellung und kann durch Wahl der Dicke des aus der Schaumstoffbahn gebildeten Schutzrohres im Einzelfall den Isolationserfordernissen angepaßt werden.

Durch die Wahl der Struktur am inneren Umfang des Schutzrohres wird das Einziehen des mediumführenden Innenrohres erleichtert, ohne die zum Schutz erforderliche Festigkeit des Schutzrohres negativ zu beeinflussen.

Anstelle der oben beschriebenen Herstellung des Schutzrohres und nachträglichen Einziehens des mediumführenden Innenrohres, kann die kombinierte Leitung auch auf diese Weise hergestellt werden, daß das mit der Struktur und ggf.

der Folie versehene Schaumstoffband um das mediumführende
Innenrohr herumgelegt und dabei an den Längsrändern durch
Schweißen, Kleben usw. fest verbunden wird, wobei - wie beim
erstgeschilderten Aufbau - die Struktur das Umlegen des
Schaumstoffbandes erleichtert, dabei die Bildung von Wülsten
verhindert und dazu beiträgt, Breitentoleranzen des Schaumstoffbandes aufzufangen. Die erfindungsgemäß vorgeschlagene
Pyramidenstruktur beeinflußt auch vorteilhaft das Verhalten
des Rohrverbundes bei temperaturbedingten Längenänderungen.
Bei Zunahme der Temperatur längt sich das mediumführende
Innenrohr und legt sich verstärkt in Bögen an seinem
äußeren Radius am Innenwandbereich des Schutzrohres an.
Bei Temperaturabnahme verkürzt sich umgekehrt das Innenrohr und legt sich in Bögen mit seinem inneren Radius an
Innenwandbereiche des Schutzrohres an. In beiden Fällen
eignet sich die Strukturierung auf der inneren Umfangsfläche
des Schutzrohres zur Aufnahme der dabei entstehenden Verpressungen.

Im Bedarfsfall kann die für den Innenumfang des Schutzrohres erfindungsgemäß vorgesehene Struktur auch am äußeren
Umfang des Schutzrohres angeordnet sein, wobei auch hier
die Folienabdeckung vorgenommen werden kann. Dadurch wird
eine bessere Griffigkeit der kombinierten Leitung sowie
ein optimaler Schutz vor Beschädigungen erzielt.

In der Zeichnung ist die kombinierte Leitung gemäß der Erfindung schematisch dargestellt; es zeigt:

Fig.1 einen Querschnitt durch die Leitungskombination mit
       eingezogenem Innenrohr in unbelasteter Stellung.

Fig.2 einen Querschnitt durch die kombinierte Leitung mit
       allseits an der Struktur anliegendem Innenrohr.

Fig.3 einen Querschnitt durch die kombinierte Leitung mit
     am Umfang auf dem Innenrohr verpreßter Struktur.

Fig.4 die Darstellung einer zwischen zwei Festpunkten eingespannten kombinierten Leitung.

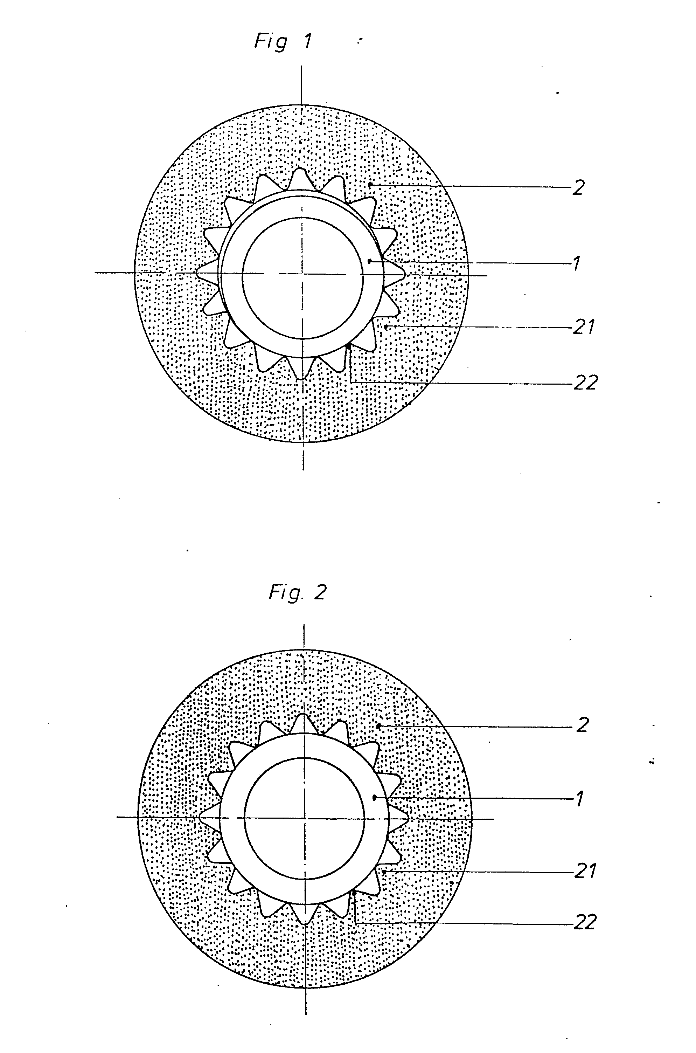

Fig.1 zeigt den Querschnitt durch die kombinierte Leitung
gemäß der Erfindung mit eingezogenem Innenrohr 1 und dieses
umgebenden Schutzrohr 2. Das Innenrohr 1 liegt mit leichtem
Spiel im lichten Querschnitt des Schutzrohres 2, wobei im
unteren Bereich der Kombination der äußere Umfang des
Innenrohres 1 an der Struktur 21 linienförmig anliegt.

Fig.2 zeigt den Querschnitt durch die kombinierte Leitung
der Erfindung mit allseits an den Rändern 22 der Struktur 21
anliegendem Innenrohr 1. Diese Situation kann auftreten,
wenn die kombinierte Leitung der Erfindung beispielsweise
von einem leichteren Füllmaterial (in der Zeichnung nicht
dargestellt) umgeben ist. Der Schaumstoff des Schutzrohres
wird dabei aufgrund der diesem Kunststoffmaterial innewohnenden Flexibilität soweit zusammengedrückt, daß über
den gesamten Umfang des Innenrohres 1 verteilt die Ränder 22
der Struktur 21 zur Anlage gebracht werden.

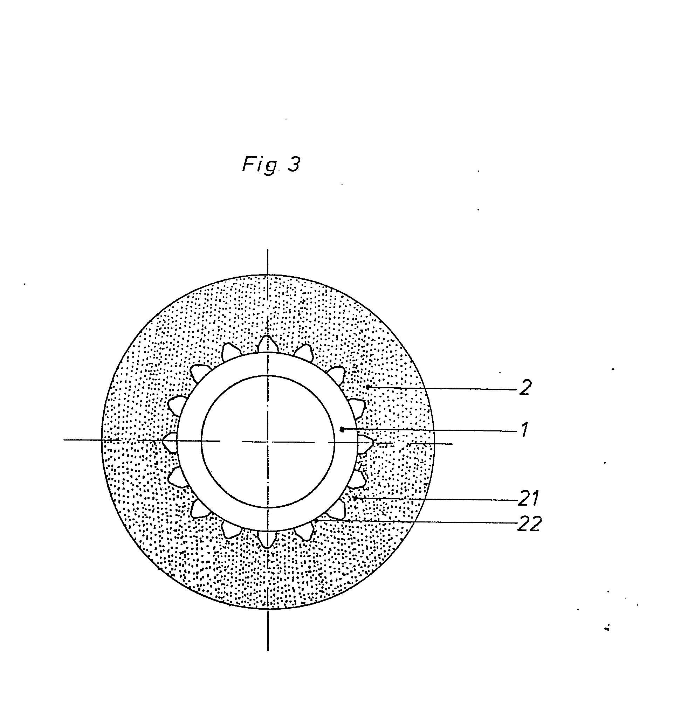

Dieser äußere Druck , durch den die Ränder 22 der Struktur 21
auf dem äußeren Umfang des Innenrohres 1 angelegt werden,
wird verstärkt in Fig.3 wiedergegeben. Man sieht deutlich,
daß die Ränder 22 der Struktur 21 in dieser Darstellung
auf dem äußeren Umfang des Innenrohres verpreßt sind. Man
kann bei dieser Darstellung von einer Art flächigen, in
Einzelbereichen unterbrochenen Anlage des inneren Umfangs
des Schutzrohres 2 am äußeren Umfang des Innenrohres 1
sprechen.

Versuche zu dieser Verpressung haben ergeben, daß sich
das aus Schaummantel und Struktur 21 bestehende Schutzrohr 2 bei Belastungen, die durch Überfüllen mit Estrich
und Beton entstehen, nur relativ wenig zusammenpressen
läßt. Aussagekräftig hierzu ist ein Versuch, der bei 20°
Außentemperatur durchgeführt wurde. Bei einer Flächenpressung von 4,4 kp/10 cm x 10 cm = 0,044 kp/cm² ergab
sich insgesamt über den Umfang gesehen eine Zusammenpressung von 0,1 mm. Dieses Maß wurde nach einer Belastung von
2 Stunden genommen. Die Flächenpressung von 0,044 kp/cm²
entspricht dabei einer Flüssigbetonsäule von 0,215 m. Die
geringfügige Zusammenpressung  ist eine direkte Folge der
erfindungsgemäßen Strukturierung am inneren Umfang des
Schutzrohres mit der gewählten Pyramidenform, wobei sich
als wesentlich herausgestellt hat, daß die Tiefe der einzelnen Pyramiden maximal die Hälfte der Dicke des Schutzrohres nicht übersteigen sollen. Andere Versuche haben gezeigt, daß sich bei vorgegebenen Anwendungskriterien als
optimale Tiefe der einzelnen Pyramiden der vierte Teil der
Dicke des Schutzrohres herausgestellt hat.

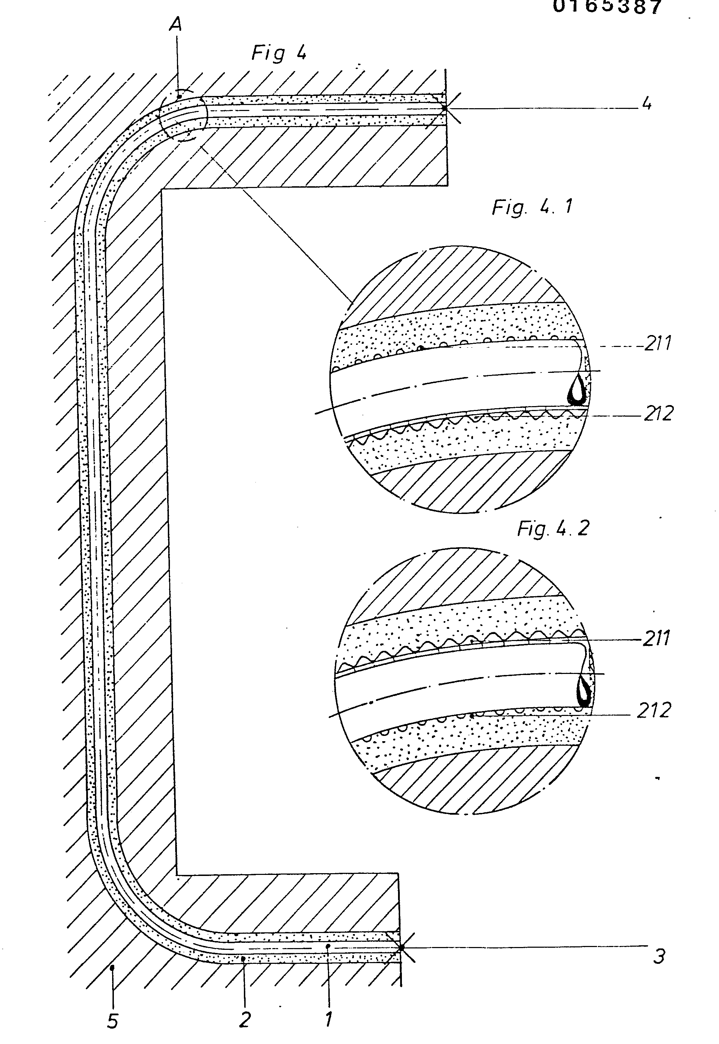

In Fig.4 ist die kombinierte Leitung mit dem Innenrohr 1
und dem Schutzrohr 2 zwischen zwei Festpunkten 3,4 in Beton 5
eingespannt dargestellt. Der aus dem Bogen unterhalb des
Festpunktes 4 bei A in vergrößerter Darstellung herausgezeichnete Teilabschnitt 4.1 zeigt das Verhalten des Innenrohres 1 bei Längenzunahme. Dabei wird die außenliegende
Struktur 211 zusammengedrückt, während das Innenrohr 1
von der innenliegenden Struktur 212 abhebt.

Beim herausgezeichneten Teilabschnitt 4.2 ist das Verhalten des Innenrohres 1 bei Längenverkürzung gezeigt. Die
außenliegende Struktur 211 wird dabei entlastet, indem
das Innenrohr in diesem Bereich abhebt, und die innenliegende Struktur 212 wird zusammengedrückt.

Auf diese Weise lassen sich durch die erfindungsgemäße Struktur im Schutzrohr 2 temperaturbedingte Längenänderungen des Innenrohres optimal auffangen.

Im Bedarfsfall kann die vorteilhafte Belegung der Pyramidenstruktur am inneren Umfang des Schutzrohres mit der dünnen Kunststoff-Folie am äußeren Umfang des Schutzrohres erfolgen. Außerdem kann auch am äußeren Umfang des Schutzrohres die Pyramidenstruktur oder eine andere Struktur eingebracht werden. Die letztere Maßnahme kann zur besseren Griffigkeit der erfindungsgemäßen kombinierten Leitung führen, während die Kunststoff-Folie am äußeren Umfang des Schutzrohres dem Schutz der Schaumstruktur des Schutzrohres dienen kann.

- Patentansprüche -

PATENTANSPRÜCHE

1. Kombinierte Leitung aus Kunststoffrohren für die Trink-
   und Brauchwasserversorgung und die Heizungsinstallation
   zur Verlegung im freien Raum, in Schächten, unter Putz,
   im Estrich oder in Beton, bestehend aus einem mediumführenden Innenrohr und einem dieses mit Isolierwirkung
   umgebenden Schutzrohr, wobei das Schutzrohr als Mantelrohr aus einem geschlossenzelligen Schaumstoff gebildet
   ist, dadurch gekennzeichnet, daß das Schutzrohr (2) wenigstens am inneren Umfang durchgehend mit einer Struktur
   (21) versehen ist, daß die Tiefe der Struktur (21)
   maximal die Hälfte der Dicke des Schutzrohres (2) ausmacht und daß das mediumführende Innenrohr (1) in unbelastetem Zustand wenigstens teilweise am strukturierten
   Innenumfang des Schutzrohres (2) anliegt.

2. Kombinierte Leitung nach Anspruch 1, dadurch gekennzeichnet, daß die Struktur (21) eine Pyramidenstruktur
   ist.

3. Kombinierte Leitung nach Anspruch 1, dadurch gekennzeichnet, daß das Schutzrohr (2) über den gesamten
   inneren Umfang durchgehend mit einer die Struktur (21)
   erhaltenden dünnen Kunststoff-Folie abgedeckt ist.

Fig 1

2

1

21

22

Fig. 2

2

1

21

22

Fig. 3

3/3

0165387

Fig 4

Fig. 4. 1

Fig. 4. 2

**Europäisches Patentamt**

## EUROPÄISCHER RECHERCHENBERICHT

| EINSCHLÄGIGE DOKUMENTE | | | EP 85103795.2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| X | DE - A1 - 2 461 013 (WIELAND-WERKE) <br> * Gesamt * <br><br> -- | 1,2 | F 16 L 9/14 <br> F 16 L 59/14 <br> F 24 D 3/10 <br> E 03 B 7/00 | |
| X | AT - B - 213 178 (HACKETHAL DRAHT- UND KABEL-WERKE AKTIENGESELL- SCHAFT) <br> * Gesamt * <br><br> -- | 1,2 | | |
| X | GB - A - 1 547 128 (KABEL- UND METALLWERKE GUTEHOFFNUNGSHÜTTE AG) <br> * Gesamt * <br><br> -- | 1,2 | | |
| A | DE - A1 - 3 232 277 (FRIEMUTH BERND) <br> * Gesamt * <br><br> ---- | 1,3 | RECHERCHIERTE SACHGEBIETE (Int. Cl.4) <br><br> F 16 L 9/00 <br> F 16 L 59/00 <br> F 24 D 3/00 <br> E 03 B 7/00 | |

Der vorliegende Recherchenbericht wurde für alle Patentansprüche erstellt.

| Recherchenort | Abschlußdatum der Recherche | Prüfer |
|---|---|---|
| WIEN | 19-07-1985 | SCHUGANICH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82